# FASCICULE DE BREVET EUROPEEN

(11) **EP 2 956 286 B1**
(45) Date de publication et mention de la délivrance du brevet: **03.04.2019**
(21) Numéro de dépôt: 14704343.4
(22) Date de dépôt: 13.02.2014
(51) Int. Cl.: B29C 49/24, B29C 49/42, B29K 67/00, B29K 105/00, B29L 31/00, B29D 22/00

(54) **PROCEDE D'OBTENTION D'UN RECIPIENT MARQUE COMPORTANT UNE ETAPE DE MARQUAGE D'UNE PREFORME**
VERFAHREN ZUM HERSTELLEN EINES MARKIERTEN BEHÄLTERS MIT EINEM SCHRITT ZUR MARKIERUNG EINER VORFORM
METHOD FOR PRODUCING A MARKED CONTAINER COMPRISING A STEP FOR MARKING A PREFORM

(30) Priorité: 14.02.2013 FR 1351271
(43) Date de publication de la demande: 23.12.2015
(73) Titulaire: Sidel Participations, 76930 Octeville-sur-Mer (FR)
(72) Inventeur: FEUILLOLEY, Guy, F-76930 Octeville Sur Mer (FR); FEVRE, Sébastien, F-76930 Octeville Sur Mer (FR)
(74) Mandataire: Siloret, Patrick
(86) Numéro de dépôt international: PCT/EP2014/052804
(87) Numéro de publication internationale: WO 2014/125014

(56) Documents cités:
- EP-A2- 2 439 033
- US-A1- 2010 104 697
- US-A1- 2012 085 071

## Description

L'invention concerne un procédé d'obtention d'un récipient marqué.

L'invention concerne plus particulièrement un procédé d'obtention d'un récipient marqué comportant les étapes suivantes :
- une première étape de chauffage au-delà d'une température de transition vitreuse d'au moins une partie à déformer de la paroi en matériau thermoplastique d'une préforme ;
- une deuxième étape de formage du récipient par injection d'un fluide sous pression dans le corps de la préforme de manière à déformer par étirement la partie chauffée de la paroi.

Il est connu de faire figurer sur les récipients, notamment les bouteilles en matériau plastique, des informations et des décorations.

Les informations figurant sur un récipient peuvent par exemple concerner la date de péremption du contenu ou la formule du produit contenu dans le récipient.

Les décorations peuvent par exemple représenter le logo du fabricant du produit.

Il est bien connu de faire figurer ces informations et décorations sur des étiquettes en papier ou en plastique. Les étiquettes sont collées sur le récipient final après l'étape de formage du récipient, c'est-à-dire lorsque les récipients sont conformés dans leur forme définitive.

L'étiquetage présente cependant de nombreux inconvénients.

Ainsi, la fabrication des étiquettes, leur impression et leur collage sur les récipients représentent un coût élevé, notamment pour la fabrication de récipients en grandes séries.

De plus, l'étiquette est susceptible d'être arraché pendant la manipulation du récipient. L'utilisateur final ne peut alors plus accéder à certaines informations importantes, telle que la date de péremption.

En outre, le recyclage des récipients en matériau plastique est compliqué par la présence de l'étiquette et de la colle.

Pour l'inscription des informations importantes, on a déjà proposé des procédés de marquage de la paroi du récipient.

Ainsi, il est connu d'imprimer directement sur la paroi du récipient certaines informations importantes au moyen d'une encre spéciale.

Néanmoins, ce procédé de marquage par impression n'est pas satisfaisant car, pour des raisons d'hygiène, l'encre utilisée pour le marquage doit sécher quasi instantanément, et elle doit aussi rester à la surface de la paroi sans pénétrer à l'intérieur du récipient par un phénomène de migration. De ce fait l'encre présente une composition spécifique qui est très onéreuse à fabriquer.

En outre, l'utilisation d'encre complique aussi les procédés de recyclage des récipients en plastique.

Pour contourner ces problèmes, on a aussi proposé un procédé de marquage par gravure de la paroi du récipient. La gravure est généralement effectuée au moyen d'un laser au dioxyde de carbone. Un tel procédé de marquage est réalisé en enlevant de la matière à la paroi du récipient, notamment par évaporation. De ce fait, la paroi présente localement une épaisseur réduite.

Cependant, dans un souci d'économie et d'écologie, on cherche à diminuer l'épaisseur de la paroi des récipients. Ainsi, il est possible de réaliser un récipient en utilisant moins de matériau plastique qu'auparavant. Or, l'enlèvement de matière sur une paroi très fine risque de fragiliser la paroi au point de crever le récipient à la moindre sollicitation.

Le document US2012 / 0085071 décrit une méthode de traitement de conteneurs. Un marquage de ce conteneur, par exemple un marquage laser, permet de traiter deux conteneurs et de les traiter de manière différente. Ce document est silencieux sur le mode de réalisation de ce marquage. Le document US2010 / 0104697 décrit un conteneur pour liquide carbonaté. La paroi du conteneur présente des sites d'amorçage de formation de bulles.

Pour résoudre ces problèmes tout en restant compatible avec une production de récipients en grandes séries, la présente invention propose un procédé d'obtention d'un récipient marqué du type décrit précédemment, caractérisé en ce qu'il comporte une étape de marquage de la préforme au cours de laquelle une marque est réalisée sur la partie de paroi à déformer afin que la marque soit étirée en même temps que la paroi lors de l'étape ultérieure de formage.

Selon d'autres caractéristiques du procédé :
- la marque est réalisée par modification de l'opacité du matériau constituant la paroi en matériau thermoplastique de la préforme ;
- la marque est réalisée au moyen d'un laser émettant un faisceau ;
- le faisceau laser est émis à une puissance inférieure à un seuil d'ablation au-delà duquel le faisceau laser commence à creuser la paroi ;
- la marque est formée de particules de carbones visibles à l'oeil nu réalisées par chauffage local du matériau dans l'épaisseur de la paroi au moyen du laser ;
- le matériau thermoplastique est formé par du "PET" et le faisceau laser présente une longueur d'onde comprise dans l'infrarouge court, notamment 1064 nm ;
- la marque est obtenue par une réaction photochimique entre le matériau thermoplastique constituant la paroi de la préforme et le faisceau laser ;
- le matériau thermoplastique est formé par du "PET" et le faisceau laser présente une longueur d'onde comprise dans l'ultraviolet proche, notamment 355 nm ;
- la marque inscrite sur la préforme lors de l'étape de marquage est déformée par anamorphose par rapport à un modèle de marque à obtenir sur le récipient final afin de prendre en compte l'étirement de la paroi lors de l'étape de formage ;
- l'étape de marquage intervient préalablement à l'étape de chauffage.

L'invention concerne aussi une installation pour la mise en oeuvre du procédé selon l'invention, caractérisé en ce qu'elle comporte :
- des moyens de marquage paramétrables ;
- des moyens de contrôle qui sont susceptibles d'enregistrer une image de la marque présente sur un récipient à l'issue de l'étape de formage ;
- une unité électronique de commande dans laquelle est mémorisé un modèle de la marque finale à obtenir, l'unité électronique de commande étant susceptible d'adapter instantanément le paramétrage des moyens de marquage en fonction de l'image de la marque obtenue par les moyens de prise de vue afin d'obtenir des marques sur les récipients suivant qui soient conformes au modèle.

Selon une autre caractéristique de l'installation, les moyens de marquage sont formés par un laser Nd-YAG.

D'autres caractéristiques et avantages de l'invention apparaitront à la lecture de la description détaillée qui va suivre pour la compréhension de laquelle on se reportera aux dessins annexés parmi lesquels :
- la figure 1 est une vue de dessus qui représente schématiquement une installation de fabrication de récipients marqués pour mettre en oeuvre le procédé selon l'invention ;
- la figure 2 est une vue de dessus qui représente une station de marquage de l'installation de la figure 1 ;
- la figure 3 est une vue de face qui représente une préforme marquée à la sortie de la station de marquage ;
- la figure 4 est une vue de face qui représente le récipient obtenu par formage à partir de la préforme de la figure 3.

Dans la suite de la description, des éléments présentant une structure identique ou des fonctions analogues seront désignés par un même numéro de référence.

Dans la suite de la description, on adoptera à titre non limitatif des orientations :
- longitudinale dirigée d'arrière en avant et désignée par la flèche "L" des figures ;
- verticale dirigée de bas en haut et désignée par la flèche "V" des figures ;
- tranversale dirigée de gauche à droite et désignée par la flèche "T" des figures.

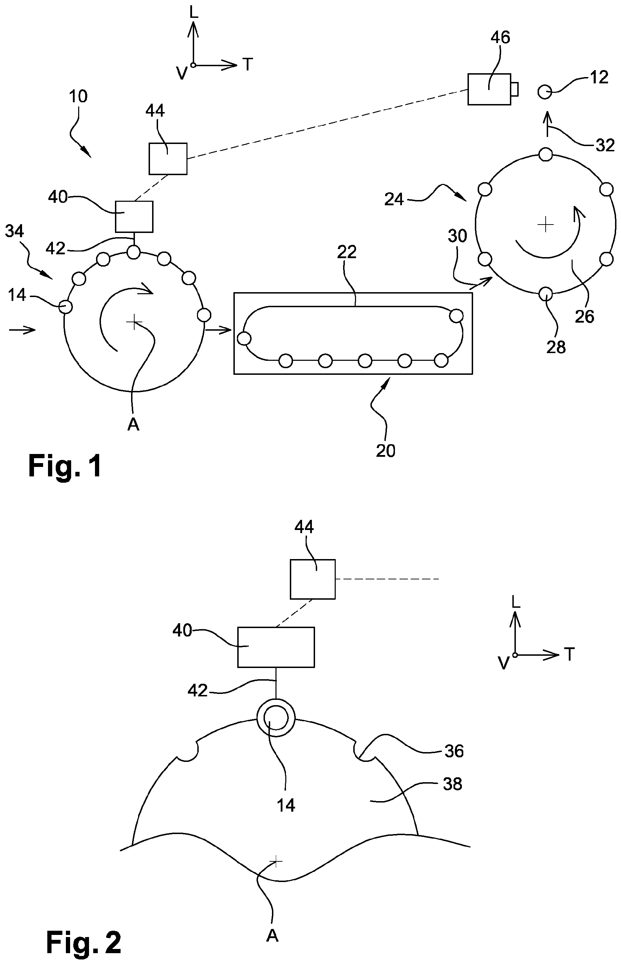

On a représenté schématiquement à la figure 1 une installation 10 de fabrication en série de récipients 12 en matériau thermoplastique. De manière non limitative, les récipients 12 sont ici des bouteilles et le matériau thermoplastique est formé par du polyéthylène téréphtalate, désigné par la suite sous son acronyme "PET".

Les récipients 12 finaux sont obtenus par formage à chaud de préformes 14 en matériau thermoplastique.

Par la suite, le terme "préforme 14" sera utilisé pour désigner le récipient avant l'étape de formage.

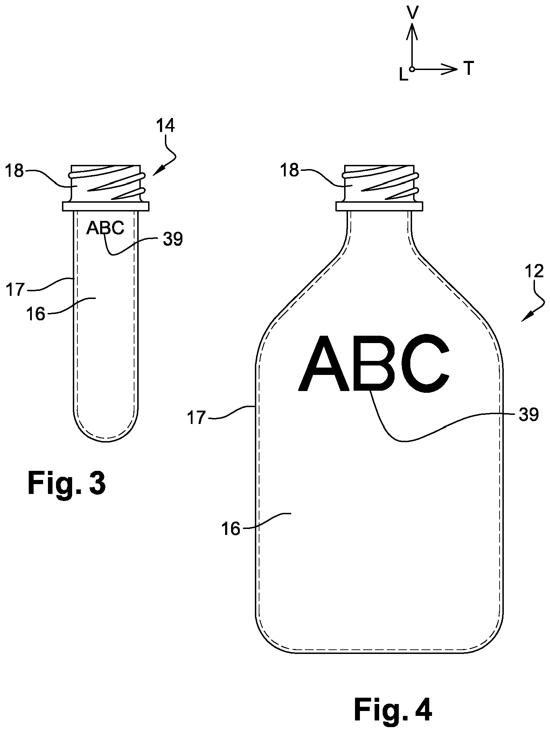

De telles préformes 14 sont obtenues généralement par injection. Comme représenté à la figure 4, elles présentent un corps 16 cylindrique à paroi 17 tubulaire fermé à l'une de ses extrémités axiales, et qui est prolongé à son autre extrémité par un col 18, lui aussi tubulaire. La paroi 17 est délimitée par une face externe et par une face interne. Le col 18 est généralement injecté de manière à posséder déjà sa forme définitive tandis que le corps 16 de la préforme 14 est appelé à subir une déformation relativement importante pour former le récipient 12 final lors d'une étape de formage.

En se reportant à la figure 1, l'installation 10 comporte une station 20 de chauffage des préformes 14. A titre d'exemple non limitatif, la station 20 de chauffage est formée par un tunnel dans lequel sont agencés des moyens (non représentés) de chauffage, telles que des lampes à infrarouge ou des moyens d'émission d'un rayonnement micro-onde. Un moyen 22 de convoyage des préformes 14 est agencés de manière à faire défiler les préformes 14 le long des moyens de chauffage depuis une entrée jusqu'à une sortie du tunnel.

Le sens de défilement des préformes 14/récipients 12 est indiqué par les flèches de la figure 1.

En variante, la station de chauffage est formée de cavités individuelles équipées de moyens de chauffage et recevant chacune une préforme.

A leur sortie de la station 20 de chauffage, la partie à déformer des préformes 14, généralement le corps 16, est rendue malléable par chauffage au-delà d'une température de transition vitreuse, tandis que les parties non déformées, en général le col 18, sont maintenues à une température suffisamment basse afin de conserver leur forme d'origine.

L'installation 10 comporte aussi une station 24 de formage des préforme 14 ainsi chauffée. La station 24 de formage est agencée en aval du poste de chauffage en référence au flux de préformes 14 dans l'installation 10.

La station 24 de formage présente ici la forme d'un carrousel 26 portant une pluralité de postes 28 de formage. Chaque poste 28 de formage est ainsi susceptible de se déplacer autour de l'axe du carrousel 26 entre un point 30 de chargement des préformes 14 chaudes et un point 32 de déchargement des récipients 12 finaux avant de reprendre un nouveau cycle.

Il s'agit ici de postes 28 de formage par étirage-soufflage des préformes 14.

A cet effet, chaque poste 28 de formage comporte un moule (non représenté) amovible qui délimite une cavité de moulage. La cavité de moulage est destinée à recevoir une préforme 14 sortant encore chaude de la station 20 de chauffage. Chaque poste 28 de formage comporte aussi une tuyère (non représentée) associée de soufflage ou d'étirage-soufflage qui est destinée à conférer au récipient 12 sa forme définitive en plaquant les parois malléables de la préforme 14 contre les parois de la cavité de moulage par injection d'un fluide sous pression par le col 18 de la préforme 14. Les parois malléables de la préforme 14 subissent ainsi un étirage qui diminue leur épaisseur.

S'agissant de postes 28 de formage par soufflage, le fluide est généralement formé par un gaz sous pression.

On comprendra cependant que l'invention est aussi applicable à d'autres types de postes de formage, notamment à des postes de formage par injection d'un liquide sous pression dans la préforme 14.

Lors de l'étape de formage des récipients 12, le carrousel 26 est animé d'un mouvement de rotation pour permettre le déplacement des préformes 14/récipients 12 finaux depuis le point 30 de chargement jusqu'au point 32 de déchargement. Ainsi, une nouvelle préforme 14 peut débuter l'étape de formage tandis que la préforme 14 précédente n'a pas encore achevé son cycle de formage. Ceci permet de maintenir un rythme élevé pour la fabrication en grande série des récipients 12.

L'installation 10 comporte aussi une station 34 de marquage des préformes 14 qui est agencée en amont de la station 24 de formage selon le sens du flux de préforme 14. La station 34 de marquage est ici agencé en amont de la station 20 de chauffage en référence au flux des préformes 14 indiqué par les flèches de la figure 1, de manière que les préformes 14 soient chauffées après leur marquage.

Comme illustré à la figure 2, la station 34 de marquage comporte un support 36 pour préforme 14, il s'agit par exemple de pinces ou d'encoches situés en périphérie d'une roue 38 de transfert montée rotative autour d'un axe "A" vertical.

La station 34 de marquage comporte en outre des moyens paramétrables pour marquer la paroi 17 de la préforme 14. Ces moyens permettent ainsi d'inscrire une marque 39 dans la paroi 17 de la préforme 14 et/ou sur une des faces interne ou externe de la paroi 17.

S'agissant de préformes 14 réalisées en un matériau thermoplastique transparent ou tout au moins translucide, les moyens permettent ici de modifier l'opacité du matériau constituant la paroi 17 en matériau thermoplastique de la préforme 14.

En variante, les moyens de marquage permettent de modifier la couleur du matériau thermoplastique.

De préférence, les moyens de marquage n'enlèvent pas de matière à la paroi 17 de la préforme 14. Ainsi, la paroi 17 du récipient 12 obtenu après formage présente une épaisseur homogène, y compris dans la zone marquée. La paroi 17 du récipient 12 est ainsi aussi résistante à la rupture dans sa partie marquée que dans ses parties non marquées. De plus, cela permet de marquer des préformes 14 destinées à devenir des récipients 12 à paroi 17 très fine.

Dans l'exemple représenté aux figures 1 et 2, les moyens de marquage comportent un laser 40. Il s'agit plus particulièrement d'un laser 40 qui est susceptible d'émettre un faisceau 42 de puissance inférieure à un seuil d'ablation au-delà duquel le laser 40 commence à creuser la paroi 17.

Le laser 40 comporte des moyens (non représentés) commandés pour déplacer le faisceau 42 émis, par exemple au moyen de lentilles et/ou de miroir mobiles par rapport au support 36. Ainsi, le support 36 permet d'acheminer la préforme 14 dans une position de marquage située en vis-à-vis du laser 40. La préforme 14 est alors immobilisée le temps que le faisceau 42 laser trace la marque 39 sur la paroi 17 immobile en se déplaçant. Le déplacement du faisceau 42 laser est ainsi commandé à la manière d'un crayon pour inscrire la marque 39 sur la paroi 17 de la préforme 14.

Les moyens de commande du déplacement du faisceau laser sont formés par une unité 44 électronique de commande qui est susceptible d'être paramétrée à volonté pour modifier la marque 39 à inscrire, il s'agit par exemple d'une commande numérique. Les paramètres à modifier concernent par exemple les coordonnées de déplacements du faisceau 42, la vitesse de déplacement du faisceau 42, etc.

En variante non représentée, les récipients ne sont pas immobilisés. Le laser est alors commandé en tenant compte du déplacement de la préforme. En ce cas, le marquage effectué est dit "cartésien", c'est-à-dire que le laser effectue un balayage uniquement vertical par rapport à un repère fixe tandis que la préforme défile horizontalement par rapport audit repère fixe, ainsi les deux axes vertical et horizontal sont couverts par le faisceau laser. Cette variante est particulièrement adapté pour des marques de petite taille qui sont effectuées en un temps relativement court par rapport à la vitesse de défilement des préformes devant le laser.

Selon une autre variante non représentée de l'invention, un laser est associé à chaque encoche de la roue de manière à marquer individuellement chaque préforme chargé sur l'encoche associée. Ainsi chaque laser accompagne la rotation de la roue pour permettre un marquage en continue sans ralentir le flux des préformes.

Le laser 40 peut tracer la marque 39 indifféremment selon un mode vectoriel, c'est-à-dire par traçage continu, ou selon un mode matriciel, c'est-à-dire par traçage point par point.

En variante non représentée, le marquage est effectué par projection d'un faisceau laser large à travers un masque.

Il s'agit ici d'un laser 40 au grenat d'yttrium-aluminium dopé au néodyme, plus connu sous la dénomination "laser Nd-YAG". Un tel laser 40 émet typiquement un faisceau 42 dans la gamme des infrarouges court, notamment d'une longueur d'onde de 1064 nm. Un exemple d'un tel laser 40 est notamment commercialisé par la société "TRUMPF" sous l'appellation "TruMark 6000".

Le faisceau 42 peut être émis en mode pulsé ou continue selon les caractéristiques du matériau thermoplastique constituant les parois de la préforme 14. En tous les cas, il est préférable que le laser 40 soit réglé de manière que la puissance instantanée du faisceau 42 émis ne dépasse pas le seuil d'ablation afin d'éviter que la paroi 17 ne soit gravée.

On a constaté que les zones de paroi 17 en "PET" visées par le faisceau 42 laser dans le domaine de l'infrarouge proche avec une puissance et/ou un temps d'exposition adapté sont soumises à un phénomène dit de "carbonisation". La carbonisation se traduit par l'apparition, dans l'épaisseur de la paroi 17, de particules (non représentées) de carbone visibles à l'oeil nu. Ces particules de carbone sont produites par le chauffage local de la matière jusqu'à sa carbonisation.

La marque 39 est ainsi formée de particules de carbones. La densité de particules de carbone dépend notamment de la puissance à laquelle est soumise la paroi 17. Ainsi, en exposant plus longuement la paroi 17 et/ou en augmentant la puissance instantanée du faisceau 42 émis, il est possible d'obtenir un marquage très foncé de la préforme 14. Le réglage du laser 40 pour obtenir une marque 39 par carbonisation et sans ablation de matériau est aisément réalisable par l'homme du métier.

On pourra bien entendu obtenir un résultat analogue en adaptant la longueur d'onde du faisceau en fonction du matériau thermoplastique sélectionné. Il faut ainsi choisir un laser qui émet un faisceau laser qui soit suffisamment absorbé par le matériau sélectionné afin de provoquer un échauffement local suffisant.

Selon le type de marquage recherché, on pourra aussi sélectionner un laser 40 émettant un faisceau 42 de longueurs d'ondes différentes.

En variante, le laser Nd-YAG émet un faisceau 42 laser d'une longueur d'onde de 532 nm émettant dans le domaine du visible, plus précisément dans la couleur verte.

Un tel faisceau 42 laser permet d'obtenir une carbonisation moins prononcée de la paroi 17 de la préforme 14 qui présente une densité de particules de carbone moins élevée. Ceci se traduit par une marque 39 moins foncée apparaissant grise à l'oeil nu.

Selon encore une autre variante de l'invention, le laser 40 Nd-YAG émet un faisceau 42 à une longueur d'onde comprise dans l'ultraviolet proche, par exemple 355 nm.

On a observé qu'au contact du faisceau 42 laser ultraviolet, la paroi 17 en "PET" de la préforme 14 subissait une réaction photochimique. Dans le cas d'espèce, cette réaction photochimique entre le faisceau 42 laser et le matériau "PET" se traduit par l'apparition d'une marque 39 opaque d'un ton très clair, provenant par exemple d'un phénomène de rupture des chaînes de polymère. Contrairement aux marques 39 obtenues par carbonisation, la marque 39 obtenue par réaction photochimique apparaît à la surface externe de la paroi 17 de la préforme 14, sans altérer la structure de la matière dans l'épaisseur de la paroi 17.

Selon d'autres variantes non représentées de l'invention, d'autres types de laser peuvent être utilisés dans le cadre de la présente invention. Comme expliqué précédemment, le laser est sélectionné et réglé pour permettre de marquer la paroi en matériau thermoplastique, en surface ou en profondeur, sans toutefois graver la paroi.

L'installation 10 ainsi décrite est mise en oeuvre par un procédé d'obtention d'un récipient 12 marqué comportant les étapes suivantes.

Lors d'une étape "E0" préalable de marquage, la préforme 14 est acheminée jusqu'à la station 34 de marquage afin que la marque 39 soit réalisée sur ou dans la partie de paroi 17 à déformer.

Puis, lors d'une première étape "E1" de chauffage, la préforme 14 est acheminée depuis la station 34 de marquage jusqu'à la station 20 de chauffage. Les parties à déformer de la paroi 17 de la préforme 14 sont alors chauffées dans le four au-delà d'une température de transition vitreuse. Ainsi, la partie de paroi 17 marquée est de ce fait chauffée au-delà de sa température de transition vitreuse.

Enfin, lors d'une deuxième étape "E2" de formage du récipient 12, la préforme 14 est acheminée depuis la station 20 de chauffage jusqu'à la station 24 de formage. Elle est reçue dans le moule et le fluide sous pression est injecté dans le corps 16 de la préforme 14 de manière à déformer par étirement la partie chauffée de la paroi 17. Un étirage par une tige d'étirage peut être réalisé simultanément à l'opération de soufflage. Durant cette étape "E2" de formage, la préforme 14 est ainsi conformé en un récipient 12 présentant sa forme finale.

La marque 39 est donc étirée en même temps que la paroi 17 lors de cette étape "E2" de formage. La marque 39 inscrite lors de l'étape "E0" précédente de marquage subit donc, lors de l'étape "E2" de formage, un étirement qui se traduit mathématiquement par une transformation appelée "anamorphose".

Lorsque la marque 39 est obtenue par carbonisation, elle devient un peu plus grise du fait de l'espacement mutuel des particules de carbone lors de l'étirement. Néanmoins, on a constaté que cette marque 39 restait parfaitement visible à l'oeil nu.

Afin que la marque 39 du récipient 12 finale soit conforme à un modèle souhaité par le fabricant, la forme de la marque 39 avant formage est déterminée en appliquant au modèle souhaité une transformation par anamorphose inverse à celle subit lors de l'étape "E2" de formage.

En outre, pour assurer que la marque 39 finale soit précisément conforme au modèle souhaité, l'installation 10 comporte avantageusement des moyens de contrôle qui sont susceptibles d'enregistrer une image de la marque 39 à l'issue de l'opération de formage. Dans l'exemple représenté à la figure 1, une caméra 46 est installée à la sortie de la station 24 de formage.

Cette caméra 46 transmet à l'unité 44 électronique de commande une image numérique des marques 39 effectivement présentent sur les récipients 12 finaux. Un modèle de la marque 39 à obtenir après l'étape "E2" de formage est mémorisé dans l'unité 44 électronique de commande. L'unité 44 électronique de commande met alors en oeuvre un procédé de comparaison d'images dont un exemple est décrit dans le document EP-B1-1.145.568. Ce procédé permet ainsi d'adapter instantanément le paramétrage des moyens de marquage afin d'obtenir des marques sur les récipients 12 suivant qui soient conformes au modèle.

En variante, l'étape préalable de marquage est interposée chronologiquement entre la première étape de chauffage et la deuxième étape de formage. En ce cas, la station de marquage est bien entendu agencée entre la station de chauffage et la station de formage en référence au flux des récipients/préformes.

Selon une autre variante non représentée de l'invention, des étapes intermédiaires sont interposées entre la première étape de chauffage et la deuxième étape de formage. Il s'agit par exemple d'une étape de conditionnement thermique au court de laquelle différentes zones du corps de la préforme sont traitées thermiquement de manière individuelles pour permettre une déformation non homogène de la préforme lors de l'étape de formage. En ce cas, on comprendra que l'invention s'applique aussi à l'étape de marquage décrite précédemment lorsqu'elle intervient avant ou après l'une quelconque des étapes intermédiaire. L'invention porte en effet sur une telle étape de marquage de la préforme intervenant avant l'étape de formage.

Le procédé d'obtention de récipients marqués réalisé selon les enseignements de l'invention permet ainsi d'obtenir des récipients marqués sans utilisation d'étiquettes et sans fragilisation de la paroi du fait de l'absence de gravure.

En outre, le fait d'effectuer le marquage sur la préforme avant l'étape "E2" de formage permet de diminuer très sensiblement la durée de l'étape "E0" de marquage. En effet, la marque 39 inscrite sur la préforme 14 est destinée à être étirée, et donc agrandie lors de l'étape "E2" de formage.

On a constaté par expérience qu'en utilisant les mêmes moyens de marquage, ici un laser Nd-YAG, il fallait au moins 60 fois plus de temps pour inscrire une marque déterminée directement sur le récipient final que pour obtenir la même marque en mettant en oeuvre le procédé réalisé selon l'invention. Ceci vient du fait que la surface à parcourir pour marquer le récipient final est bien plus importante que la surface à parcourir pour marquer la préforme.

Ainsi, le procédé réalisé selon les enseignements de l'invention permet en outre d'obtenir des récipients marqués avec une cadence adaptée à la production de récipients en grandes séries.

## Revendications

1. Procédé d'obtention d'un récipient (12) marqué comportant les étapes suivantes :
- une première étape (E1) de chauffage au-delà d'une température de transition vitreuse d'au moins une partie à déformer de la paroi (17) en matériau thermoplastique d'une préforme (14) ;
- une deuxième étape (E2) de formage du récipient par injection d'un fluide sous pression dans le corps (16) de la préforme (14) de manière à déformer par étirement la partie chauffée de la paroi (17) ;
**caractérisé en ce qu'**il comporte une étape (E0) de marquage de la préforme (14) au cours de laquelle une marque (39) est réalisée sur la partie de paroi (17) à déformer afin que la marque (39) soit étirée en même temps que la paroi (17) lors de l'étape (E2) ultérieure de formage.

2. Procédé selon la revendication précédente, **caractérisé en ce que** la marque (39) est réalisée par modification de l'opacité du matériau constituant la paroi (17) en matériau thermoplastique de la préforme (14).

3. Procédé selon la revendication précédente, **caractérisé en ce que** la marque (39) est réalisée au moyen d'un laser (40) émettant un faisceau (42).

4. Procédé selon la revendication précédente, **caractérisé en ce que** le faisceau (42) laser est émis à une puissance inférieure à un seuil d'ablation au-delà duquel le faisceau (42) laser commence à creuser la paroi.

5. Procédé selon la revendication précédente, **caractérisé en ce que** la marque (39) est formée de particules de carbones visibles à l'oeil nu réalisées par chauffage local du matériau dans l'épaisseur de la paroi au moyen du laser (40).

6. Procédé selon la revendication précédente, **caractérisé en ce que** le matériau thermoplastique est formé par du "PET" et **en ce que** le faisceau (42) laser présente une longueur d'onde comprise dans l'infrarouge court, notamment 1064 nm.

7. Procédé selon la revendication 4, **caractérisé en ce que** la marque (39) est obtenue par une réaction photochimique entre le matériau thermoplastique constituant la paroi (17) de la préforme (14) et le faisceau (42) laser.

8. Procédé selon la revendication précédente, **caractérisé en ce que** le matériau thermoplastique est formé par du "PET" et **en ce que** le faisceau (42) laser présente une longueur d'onde comprise dans l'ultraviolet proche, notamment 355 nm.

9. Procédé selon l'une quelconque des revendications précédentes, **caractérisé en ce que** la marque (39) inscrite sur la préforme (14) lors de l'étape (E0) de marquage est déformée par anamorphose par rapport à un modèle de marque à obtenir sur le récipient (12) final afin de prendre en compte l'étirement de la paroi (17) lors de l'étape (E2) de formage.

10. Procédé selon l'une quelconque des revendications précédentes, **caractérisé en ce que** l'étape (E0) de marquage intervient préalablement à l'étape (E1) de chauffage.

11. Installation (10) pour la mise en oeuvre du procédé selon l'une quelconque des revendications précédentes, **caractérisé en ce qu'**elle comporte :
- des moyens (40) de marquage paramétrables ;
- des moyens (46) de contrôle qui sont susceptibles d'enregistrer une image de la marque présente sur un récipient (12) à l'issue de l'étape (E2) de formage ;
- une unité (44) électronique de commande dans laquelle est mémorisé un modèle de la marque finale à obtenir, l'unité (44) électronique de commande étant susceptible d'adapter instantanément le paramétrage des moyens (40) de marquage en fonction de l'image de la marque (39) obtenue par les moyens de prise de vue afin d'obtenir des marques (39) sur les récipients suivant qui soient conformes au modèle.

12. Installation selon la revendication précédente, **caractérisé en ce que** les moyens de marquage sont formés par un laser (40) Nd-YAG.

## Patentansprüche

1. Verfahren zur Herstellung eines markierten Behälters (12), das die folgenden Schritte aufweist:
- einen ersten Schritt (E1) des Erhitzens mindestens eines zu verformenden Bereichs der Wand (17) aus thermoplastischem Material einer Vorform (14) über eine Glasübergangstemperatur hinaus;
- einen zweiten Schritt (E2) des Bildens des Behälters durch Einspritzen eines unter Druck stehenden Fluids in den Körper (16) der Vorform (14), um den erhitzten Bereich der Wand (17) durch Strecken zu verformen;
**dadurch gekennzeichnet, dass** es einen Schritt (E0) des Markierens der Vorform (14) umfasst, während welchem eine Markierung (39) auf dem zu verformenden Bereich der Wand (17) ausgeführt wird, damit die Markierung (39) zur gleichen Zeit wie die Wand (17) beim späteren Schritt (E2) des Bildens gestreckt wird.

2. Verfahren nach dem vorhergehenden Anspruch, **dadurch gekennzeichnet, dass** die Markierung (39) durch Ändern der Opazität des Materials, das die Wand (17) aus thermoplastischem Material der Vorform (14) bildet, ausgeführt wird.

3. Verfahren nach dem vorhergehenden Anspruch, **dadurch gekennzeichnet, dass** die Markierung (39) mittels eines Lasers (40) ausgeführt wird, der einen Strahl (42) abgibt.

4. Verfahren nach dem vorhergehenden Anspruch, **dadurch gekennzeichnet, dass** der Laserstrahl (42) mit einer Leistung unter einer Ablationsschwelle abgegeben wird, über welcher der Laserstrahl (42) beginnt, die Wand abzutragen.

5. Verfahren nach dem vorhergehenden Anspruch, **dadurch gekennzeichnet, dass** die Markierung (39) von Teilchen von Kohlenstoffen gebildet wird, die mit bloßem Auge sichtbar sind, die durch örtliches Erhitzen des Materials in der Dicke der Wand mittels des Lasers (40) ausgebildet werden.

6. Verfahren nach dem vorhergehenden Anspruch, **dadurch gekennzeichnet, dass** das thermoplastische Material von "PET" gebildet wird, und dadurch, dass der Laserstrahl (42) eine Wellenlänge aufweist, die im kurzen Infrarotbereich liegt, insbesondere 1064 nm.

7. Verfahren nach Anspruch 4, **dadurch gekennzeichnet, dass** die Markierung (39) durch eine photochemische Reaktion zwischen dem thermoplastischen Material, das die Wand (17) der Vorform (14) bildet, und dem Laserstrahl (42) erhalten wird.

8. Verfahren nach dem vorhergehenden Anspruch, **dadurch gekennzeichnet, dass** das thermoplastische Material von "PET" gebildet wird, und dadurch, dass der Laserstrahl (42) eine Wellenlänge aufweist, die im nahen ultravioletten Bereich liegt, insbesondere 355 nm.

9. Verfahren nach einem der vorhergehenden Ansprüche, **dadurch gekennzeichnet, dass** die Markierung (39), die auf der Vorform (14) beim Schritt (E0) des Markierens eingeschrieben wird, durch Anamorphose bezogen auf ein Modell einer Markierung verformt wird, die auf dem endgültigen Behälter (12) zu erzielen ist, um die Streckung der Wand (17) beim Schritt (E2) des Bildens zu berücksichtigen.

10. Verfahren nach einem der vorhergehenden Ansprüche, **dadurch gekennzeichnet, dass** der Schritt (E0) des Markierens vor dem Schritt (E1) des Erhitzens erfolgt.

11. Anlage (10) zur Umsetzung des Verfahrens nach einem der vorhergehenden Ansprüche, **dadurch gekennzeichnet, dass** sie Folgendes aufweist:
- parametrierbare Markierungsmittel (40);
- Steuerungsmittel (46), die geeignet sind, ein Bild der Markierung, die auf einem Behälter (12) vorhanden ist, nach dem Schritt (E2) des Bildens aufzuzeichnen;
- eine elektronische Steuerungseinheit (44), in der ein Modell der endgültigen zu erzielenden Markierung gespeichert ist, wobei die elektronische Steuerungseinheit (44) geeignet ist, die Parametrierung der Markierungsmittel (40) in Abhängigkeit von dem Bild der Markierung (39), das von den Bildaufnahmemitteln erhalten wird, augenblicklich anzupassen, um Markierungen (39) auf den folgenden Behältern zu erzielen, die dem Modell entsprechen.

12. Anlage nach dem vorhergehenden Anspruch, **dadurch gekennzeichnet, dass** die Markierungsmittel von einem Nd-YAG-Laser (40) gebildet sind.

## Claims

1. Method for producing a marked container (12) comprising the following steps:
- a first step (E1) of heating at least one shape-changing portion of the thermoplastic material wall (17) of a preform (14) above a glass transition temperature;
- a second step (E2) of forming the container by injecting a pressurized fluid into the body (16) of the preform (14) so as to deform the heated part of the wall (17) by stretching it;
**characterized in that** said method comprises a step (E0) of marking the preform (14) during which a mark (39) is realized on the shape-changing portion of the wall (17) so that the mark (39) is stretched at the same time as the wall (17) during the subsequent forming step (E2).

2. Method according to the preceding claim, **characterized in that** the mark (39) is realized by modifying the opacity of the material which makes up the thermoplastic material wall (17) of the preform (14).

3. Method according to the preceding claim, **characterized in that** the mark (39) is realized by means of a laser (40) which emits a beam (42).

4. Method according to the preceding claim, **characterized in that** the laser beam (42) is emitted at a power which is less than an ablation threshold above which the laser beam (42) starts to hollow out the wall.

5. Method according to the preceding claim, **characterized in that** the mark (39) is formed by carbon particles which are visible to the naked eye and are realized by heating the material locally within the thickness of the wall by means of the laser (40).

6. Method according to the preceding claim, **characterized in that** the thermoplastic material is formed by "PET" and **in that** the laser beam (42) has a wavelength included in shortwave infrared, notably 1064 nm.

7. Method according to Claim 4, **characterized in that** the mark (39) is obtained as a result of a photochemical reaction between the thermoplastic material making up the wall (17) of the preform (14) and the laser beam (42).

8. Method according to the preceding claim, **characterized in that** the thermoplastic material is formed by "PET" and **in that** the laser beam (42) has a wavelength included in the near-ultraviolet, notable 355 nm.

9. Method according to any one of the preceding claims, **characterized in that** the mark (39) inscribed on the preform (14) during the marking step (E0) is deformed by anamorphosis with respect to a specimen mark to be produced on the final container (12) in order to take into account the stretching of the wall (17) during the forming step (E2).

10. Method according to any one of the preceding claims, **characterized in that** the marking step (E0) occurs before the heating step (E1).

11. Installation (10) for implementing the method according to any one of the preceding claims, **characterized in that** said installation comprises:
- parameterizable marking means (40);
- control means (46) which are capable of recording an image of the mark that is present on a container (12) at the end of the forming step (E2);
- an electronic control unit (44) in which a specimen of the final mark to be produced is stored, the electronic control unit (44) being capable of adapting the parameterization of the marking means (40) instantaneously based on the image of the mark (39) obtained by the camera so as to obtain marks (39) on the following containers which are a true copy of the specimen.

12. Installation according to the preceding claim, **characterized in that** the marking means are formed by a laser (40) Nd-YAG,
